Europäisches Patentamt

European Patent Office

Office européen des brevets

(19)

(11) **EP 0 738 074 B1**

(12) **FASCICULE DE BREVET EUROPEEN**

(45) Date de publication et mention
de la délivrance du brevet:
**14.06.2000 Bulletin 2000/24**

(51) Int Cl.⁷: **H04N 3/15**

(21) Numéro de dépôt: **96400740.5**

(22) Date de dépôt: **05.04.1996**

(54) **Procédé de détection à cycles d'intégration et de lecture répartis pour caméra à balayage, et barrette de détection correspondante**

Detektionsverfahren mit verteilten Integrations- und Ausleseperioden für eine Abtastungskamera, und entsprechende Detektoranordnung

Detection method with distributed integration and read-out cycles for a scanning camera, and detector array therefor

(84) Etats contractants désignés:
**DE FR GB IT**

(30) Priorité: **11.04.1995 FR 9504338**

(43) Date de publication de la demande:
**16.10.1996 Bulletin 1996/42**

(73) Titulaire: **THOMSON-CSF**
**75008 Paris (FR)**

(72) Inventeurs:
• **Audier, Marcel-Francis**
**92402 Courbevoie Cedex (FR)**
• **Pepin, Christian**
**92402 Courbevoie Cedex (FR)**
• **Besnard, Véronique**
**92402 Courbevoie Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**EP-A- 0 575 220          DE-C- 3 938 128**
**US-A- 5 327 234**

**Description**

L'invention concerne l'imagerie à balayage, et plus particulièrement la détection d'image à partir d'un ensemble de capteurs élémentaires associés à un système de balayage d'image. L'invention s'applique notamment aux caméras infrarouges, aux caméras "visibles" à capteurs photosensibles dans la bande spectrale du rayonnement visible-proche infrarouge, ou aux dispositifs de veille à barrette tournante.

Afin d'obtenir une sensibilité de détection suffisante, les détecteurs présentent une forme de barrette comportant au moins une rangée de capteurs élémentaires disposée dans un plan dit "plan focal" de la barrette, selon une direction principale orthogonale à la direction du balayage. Le balayage est effectué par un système opto-mécanique adapté comportant en particulier un miroir mobile et une combinaison optique de formation et de projection d'une image de la scène observée sur la barrette de détection.

Chaque capteur analyse alors un champ élémentaire d'angle de vue correspondant aux caractéristiques géométriques du capteur et de son environnement structurel, pendant un temps d'exposition élémentaire donné en fonction des caractéristiques de balayage. Au cours du balayage d'une scène, le champ de vue observé est alors décomposé en séries de champs élémentaires, chaque série de champs élémentaires étant défini et analysé par une voie de détection comportant au moins un capteur élémentaire. Dans le cas d'un balayage horizontal, le nombre de voies de détection est alors égal au nombre de lignes décrites sur l'image de scène projetée par le système opto-mécanique.

Sur chaque voie de détection, les charges générées par chaque capteur élémentaire en fonction de l'éclairement qu'il reçoit sont stockées puis multiplexées pour former un signal video. Le nombre de lignes ainsi analysées correspond soit au nombre de lignes par trame du standard video utilisé en sortie de la caméra lorsque le balayage est de type horizontal, soit à la résolution de ligne lorsque le balayage est de type vertical.

Afin d'augmenter la sensibilité de détection de chaque voie, le balayage opto-mécanique, dit balayage parallèle, est généralement couplé à un balayage sommateur dit balayage série. Un tel procédé est connue sous le nom d'Intégration à Temps Différé (ou en abrégé TDI, c'est-à-dire "Time Delay and Integration" en terminologie anglo-saxonne). Il est décrit par exemple dans l'article de R.J.Martin et al, intitulé "time division multiplexed time delay integration", et publié dans la revue S.P.I.E.vol.930 (1988), pages 26 à 43.

Le balayage série est obtenu en utilisant, pour chaque voie de détection, plusieurs capteurs élémentaires disposés selon la direction de balayage et espacés d'un multiple entier du pas des "pixels" (terme utilisé dans la suite de l'exposé et signifiant "points d'image élémentaires" en terminologie anglo-saxonne) fixé par le standard de télévision utilisé. Un même champ élémentaire est donc successivement analysé par chacun des capteurs d'une même voie de détection, les sorties des capteurs alimentant un module de traitement TDI associé à chaque voie de détection. Les charges générées par les capteurs sont ainsi injectées et intégrées dans des circuits d'injection et d'intégration adaptés afin d'être retardées, puis sont sommées. Les cycles de fonctionnement des circuits, gérés par un séquenceur, sont identiques pour tous les capteurs; ceci impose une lecture synchrone des circuits d'intégration, soit en utilisant un bus avec autant de pistes que de capteurs par voie de détection, soit un bus à piste unique associée à une mémoire-tampon.

En fin d'intégration, la lecture se fait soit en charges, par un registre de sommateurs à décalage de type CCD (initiales de "Charged Coupled Device", c'est-à-dire circuit à transfert de charges en terminologie anglo-saxonne), soit en tension, par un registre de sommation réalisé en technologie CMOS. Une telle technologie est connue par exemple de l'article de I.M. Baker et al, IEEE Conference Publication n° 321(1990). Afin de pouvoir traiter toutes les informations de luminance engendrées par les capteurs élémentaires, chaque registre de sommation, associé à chaque voie de détection, comporte autant de cellules que d'informations en cours d'élaboration.

L'un des principaux problèmes posés par ce type d'architecture est dû à son encombrement, qui empêche l'intégration des registres de sommation au plan focal de la barrette de détection. Les registres sont donc montés dans un autre plan, avec ou sans les circuits d'injection associés. Le problème est alors reporté sur l'encombrement des connexions.

Lorsque l'ensemble circuits d'injection/intégration - registres de sommation est déporté, l'encombrement des connexions entre les capteurs et les circuits d'injection limite le nombre de capteurs par voie de détection, et donc la sensibilité de détection.

Lorsque, seuls, les circuits de sommation sont déportés, le nombre de capteurs par voie de détection peut être augmenté en utilisant une seule connexion -un bus à piste unique- pour établir le transfert d'information entre les circuits d'injection et les sommateurs des registres de sommation.

Cependant, une telle architecture nécessite encore la mise en place d'un circuit de mémorisation intégré aux circuits d'injection, réalisé par exemple à l'aide d'un échantillonneur-bloqueur, afin d'éviter toute coïncidence temporelle entre les lectures de l'information contenue dans les circuits d'injection pendant le cycle d'intégration; une répartition uniforme des instants de lecture est ainsi obtenue. Mais la présence de cette mémoire réduit sensiblement la surface utile, donc les capacités d'intégration, du circuit, et crée un risque supplémentaire de dégradation de l'information (couplages parasites, courants de fuite, ...). La récupération de cette perte de surface active peut se faire au prix d'un accroissement du pas capteur, entraînant une augmentation de dimension du détecteur et, par suite, une diminution du rendement de balayage.

L'invention vise précisément à pallier ces défauts en proposant un procédé de détection et une architecture de barrette correspondante, permettant d'intégrer les registres de sommation TDI dans le plan focal de la barrette. Un autre but de l'invention est de rendre compatible divers modes d'utilisation d'une caméra à balayage, définis à partir de paramètres variables de son balayage, permettant un balayage partiel ou une adaptation à différents standards de télévision.

Pour atteindre ces objectifs, la géométrie de la matrice des capteurs de la barrette de détection est conformée selon une architecture d'un type particulier, permettant d'intégrer un circuit de gestion des cycles d'intégration et de transferts de données entre les circuits d'injection-intégration et les circuits de sommation; cette architecture étant de plus compatible avec le passage d'un mode de fonctionnement, défini par un sous-balayage et un standard donnés, à un autre.

Plus précisément, l'invention a pour objet un procédé de détection à cycles d'intégration et de lecture répartis pour caméra à balayage selon une direction donnée destinée à former une image composée de pixels espacés d'un pas de valeur correspondant à un standard prédéterminé, ladite caméra comportant une barrette de plusieurs rangées de capteurs élémentaires disposées selon une direction orthogonale à la direction de balayage, les capteurs de rangées différentes et alignés selon la direction de balayage définissant une voie de détection TDI, chaque voie de détection comportant un circuit d'injection et d'intégration des charges délivrées par chaque capteur durant une durée d'exposition pour former un signal d'échantillonnage, et un registre de lecture à sommateurs pour cumuler les signaux d'échantillonnage correspondant à un même pixel, caractérisé en ce qu'il consiste à choisir une valeur de pas spatial pour les capteurs d'une même voie de détection qui diffère de celle du pas pixel d'une fraction de celui-ci telle qu'une coïncidence capteur-pixel, qui est réalisée pour un capteur de référence ($C_0$), n'est plus synchrone pour tout autre capteur exposé au même champ de vue élémentaire, et en ce qu'il consiste à inscrire dans chaque sommateur, entre deux lectures successives de chaque capteur, l'information issue du circuit d'intégration associé.

Selon une caractéristique particulière du procédé, le choix du pas spatial des capteurs d'une même voie de détection, qui fournit une valeur de rapport d'asynchronisme géométrique selon la direction du balayage entre ce pas et celui des pixels d'un standard donné, induit un ordre de lecture des circuits d'intégration d'une même voie de détection, cet ordre étant prédéterminé en fonction des valeurs de grandissement et de pas pixel définis à partir du mode de fonctionnement considéré, en fonction d'un sous-balayage et d'un standard donnés.

L'invention concerne également une barrette de détection comportant un circuit de gestion logique pour la commande des transferts d'information entre les circuits d'injection, d'intégration et de sommation, réalisés en technologie CMOS ou en technologie mixte CMOS-CCD, compatible avec la technologie utilisée. pour le circuit de gestion logique.

L'invention permet de simplifier les circuits d'injection et d'intégration en s'affranchissant d'une mémoire-tampon telle qu'un échantillonneur-bloqueur, de réduire le pas entre capteurs dans la direction de balayage qui peut être choisi au minimum autorisé par les technologies utilisées, pour réaliser les capteurs de photodétection et les circuits d'hybridation entre les circuits d'injection-intégration et de lecture. Ainsi les dimension globales sont réduites.

L'invention permet également d'augmenter le rendement de balayage du fait de la diminution de la hauteur de la barrette de détection par rapport à la hauteur de l'image optique projetée sur la barrette.

D'autres caractéristiques et avantages apparaîtront à la lecture de la description d'un mode de réalisation qui suit, accompagné des figures annexées qui représentent, respectivement:

- la figure 1, un exemple schématisé de voie de détection d'une barrette selon l'invention, disposée en regard des bords des premiers pixels de la ligne d'image formée à partir de ladite voie de détection;
- la figure 2, un schéma de barrette selon l'invention pour caméra à balayage vertical et adaptée au standard "625 lignes CCIR";
- la figure 3, un exemple de circuit de gestion pour la mise en oeuvre du procédé de détection à cycles d'intégration et de lecture répartis selon l'invention;
- la figure 4, un exemple de registre d'adressage du registre de lecture des charges délivrées par les capteurs d'une voie de détection puis intégrées, le nombre de standard pouvant être sélectionné étant égal à trois.

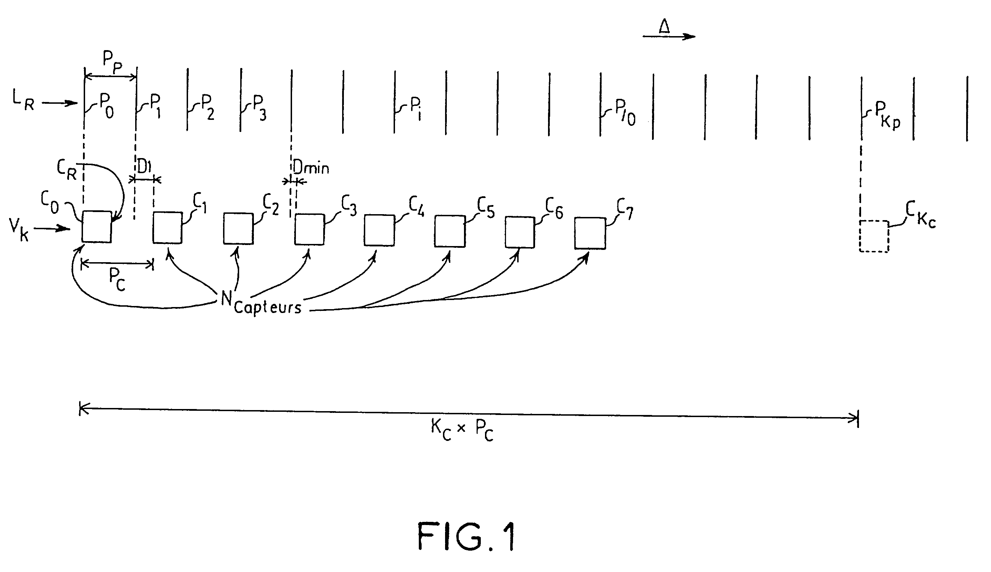

Sur l'exemple de la figure 1, le nombre $N_c$ de capteurs d'une voie de détection d'une barrette de détection selon l'invention, telle que schématiquement représentée, est égal à 8. Les autres voies de détection, non représentées, s'étendent en rangées parallèlement à celle représentée, de manière à couvrir une hauteur ou une largeur d'image selon le mode de balayage d'image, et comportent un même nombre utile de capteurs. Les capteurs $C_i$ de la voie représentée, référencés $C_0$ à $C_7$, sont de forme approximativement carrée, de côté par exemple égal à 25μm, et sont alignés, suivant la direction de balayage $\Delta$, qui peut être horizontale ou verticale, avec un pas spatial désigné par $p_c$. Une telle barrette de détection est par exemple connue de la demande de brevet publiée FR-2 692 423 et déposée au nom de la Demanderesse.

Il a également été représenté des positions respectives $P_i$, i variant de manière générale de 0 à J (J étant dans des exemples connus égal à environ 760), correspondant aux bords des pixels de la ligne d'image $L_k$ analysés par la voie de détection $V_k$, k variant de manière générale de 0 à M (M étant égal à 1024 dans l'exemple connu). Le pas spatial des pixels est désigné par $p_p$. L'image finale, qui comporte J fois M pixels, est conforme à un standard prédéterminé.

Les pixels d'une même ligne d'image $L_k$ sont formés à partir des signaux d'échantillonnage délivrées par les capteurs au cours du balayage, en fonction de l'éclairement qu'ils reçoivent d'un même champ élémentaire successivement analysé. Ces signaux sont d'abord injectés, intégrés puis lus pour être cumulés séquentiellement par un traitement de type TDI dans le plan focal de la barrette; ils sont enfin mis en forme pour constituer un signal vidéo compatible avec le standard de télévision utilisé, en particulier avec le pas pixel utilisé.

Afin de permettre une comparaison directe entre la position des capteurs élémentaires de la barrette et celles des pixels de l'image finale obtenue, la ligne de pixels $L_k$ a été reportée sur la figure de manière à ce que les positions $P_i$ des pixels de cette ligne soient disposées parallèlement et en regard de la voie de détection $V_k$. La position $P_0$ du premier pixel est en coïncidence spatiale avec un côté $c_R$ du premier capteur $C_0$, qui sert de capteur de référence, à un instant de référence donné. Cet instant de référence correspond à la fin du temps d'exposition du capteur $C_0$ pour l'un des champs de vue élémentaires successivement analysés par la voie de détection $V_k$ étudiée.

Selon l'invention, le pas capteur $p_c$ se différencie du pas pixel $p_p$ d'une valeur égale à une fraction de ce dernier de sorte que la coïncidence capteur-pixel, qui est réalisée pour le capteur de référence $C_0$, n'est plus synchrone pour tout autre capteur exposé au même champ de vue élémentaire.

Les informations issues des différents capteurs forment alors des cycles d'analyse déphasés. Ce déphasage, de période supérieure à celle de traitement des capteurs d'une même voie de détection, permet une lecture séquentielle sur un bus unique. Cette lecture est réglée de manière à être en phase avec la fin du cycle d'injection-intégration de la voie de détection considérée correspondant à un même champ de vision élémentaire, si bien qu'aucune mémoire-tampon n'est alors requise.

De manière plus détaillée, les pas capteur et pixel, respectivement notés $p_c$ et $p_p$, sont tels qu'il existe un pas commun de coïncidence spatio-temporel $P_{st}$ entre les deux séries d'éléments. Autrement dit, Il existe deux nombres entiers de capteurs et de pixels, respectivement $K_c$ et $K_p$, chacun supérieur ou égal à un, qui vérifient la relation:

$$P_{st} = K_p p_p = K_c p_c$$

La condition de non-coïncidence impose que le nombre $N_c$ de capteurs mis en oeuvre par voie de détection reste inférieur à $K_c$, $K_c$ correspondant en fait au nombre fictif de capteurs pour lequel il y a coïncidence périodique des cycles d'injection-intégration. Le décalage spatial $D_i$ entre un capteur $C_i$, différent du capteur de référence, et la position de repérage $P_i$ du pixel à échantillonner le plus proche n'est donc jamais nul. Par exemple, le décalage $D_1$ pour le premier capteur $C_1$ est directement égal à la différence entre les valeurs des pas $p_p$ et $p_c$.

Le décalage $D_i$ peut, plus précisément, être quantifié simplement à partir des valeurs des pas $p_p$ et $p_c$ et du décalage minimal, noté $D_{min}$, obtenu pour l'un des capteurs d'une même voie de détection; un calcul simple montre que la valeur du décalage minimal vaut en fonction des paramètres précédents:

$$D_{min} = \frac{p_c}{K_p} = \frac{p_p}{K_c} \tag{1}$$

Il est ainsi possible de classer les capteurs $C_i$ en fonction de la valeur entière croissante de leur décalage par rapport au pixel le plus proche, tel qu'obtenue après normalisation par la valeur minimale $D_{min}$. Par exemple, dans ce classement, le rang $U_1$ du premier capteur $C_1$ vaut:

$$U_1 = \frac{D_1}{D_{min}} \qquad \text{(relation (2))}$$

ou encore:

$$U_1 = \frac{(p_p - p_c)}{D_{min}}$$

(en sachant que $D_1 = p_p - p_c$)

Selon l'invention, ce classement détermine l'ordre de lecture des différents cycles d'injection-intégration des différents capteurs d'une même voie de détection, en définissant ainsi une répartition des cycles d'intégration.

Cet ordre peut être déterminé de manière plus générale par les valeurs successives des termes $U_i$ d'une progression arithmétique successivement "recalée" (c'est-à-dire translatée d'une amplitude égale à un nombre entier de fois $K_c$, soit en terminologie mathématique "modulo $K_c$") sur les valeurs de "i" correspondant aux $N_c$ capteurs réellement utilisés par voie de détection, i étant le numéro du capteur dans l'ordre de numérotation croissant de voisinage (tel que celui représenté par la figure 1). La progression a ainsi un premier terme $U_0$ nul (correspondant au capteur de référence $C_0$) et une raison "r" telle que:

$$U_i = i \cdot r \qquad [\text{modulo } K_c]$$

La raison "r" de cette progression peut être déterminée simplement en se plaçant fictivement dans le cas où la raison est égale à $U_1 \cdot r$, le premier capteur $C_1$ ayant alors pour rang 1; dans ces conditions la relation précédente s'écrit:

$$1 = U_1 \cdot r \qquad [\text{modulo } K_c]$$

soit

$$r = \frac{(nK_c + 1)}{U_1}$$

n étant un entier adapté
ou

$$r = \frac{(nK_c + 1)D_{min}}{D_1}$$

(suivant la relation (2))

D'autre part, en prenant pour référence la "distance de lecture" $D_l$, correspondant à la distance parcourue par l'image balayée pendant la durée de transfert de données d'un capteur vers un circuit de sommation, la condition de non-coïncidence des cycles d'injection-intégration peut s'exprimer par la fourchette de valeurs à laquelle doit appartenir celle du pas capteur $p_c$: cette valeur est en effet telle que la distance minimale $D_{min}$ soit, d'une part, supérieure à la distance $D_l$ nécessaire au transfert de données et, d'autre part, inférieure au décalage maximale correspondant à la distance parcourue entre l'instant de fin d'exposition du capteur de dernier rang et celui (instant de référence) du capteur de référence. Cette double limitation se traduit par la double inégalité suivante:

$$D_l < D_{min} < \frac{(p_p - D_l)}{(N_c - 1)} \tag{3}$$

Pratiquement, le pas pixel défini par $p_p$ dans la direction de balayage et par le nombre de lignes dans la direction orthogonale au balayage est fixé par le standard de télévision. Le nombre de capteurs $N_c$ est imposé par la sensibilité recherchée par voie de détection, et le pas capteur $p_c$ est limité par la technologie utilisée qui en fixe la valeur minimale.

Afin de limiter l'encombrement de chaque voie de détection, il convient de choisir l'ordre de lecture des circuits de sommation pour la formation, par accumulation des charges, du signal de luminance destiné à chaque pixel. Il est ainsi avantageux de prendre la lecture dans l'ordre du capteur de rang le plus élévé au capteur de rang inférieur, tels que définis selon la progression arithmétique décrite plus haut.

Dans ces conditions, le nombre d'étages de sommation de chaque module est au moins égal au nombre de signaux d'échantillonnnage, noté ci-après $N_{ech}$. En effet; le nombre d'étages de sommation du module de traitement TDI associé à chaque voie de détection est alors tel qu'au moins un sommateur est affecté au traitement des informations de luminance de chacun des signaux d'échantillonnage.

Or le nombre d'informations à traiter dans le plan focal de la barrette, pour chaque voie de détection et par cycle de lecture, est déterminé par le nombre de signaux d'échantillonnage délivrés par le premier capteur dans l'ordre des cycles d'injection et par le dernier capteur dans cet ordre, à une unité près. Un calcul simple montre alors que le nombre de signaux d'échantillonnage, et donc le nombre minimal d'étages de sommation par voie de détection $N_{tdi}$, vaut:

$$N_{tdi} = N_{ech} = PE \left[ \frac{(n_c - 1)p_c}{p_p} \right]$$

avec PE = partie entière

Il est décrit ci-après une première architecture de barrette de détection correspondant au procédé de l'invention pour un seul standard de télévision et un seul mode de balayage. Cet exemple est choisi compatible avec le standard de télévision international connu sous la dénomination "CCIR 625 lignes". Ce standard au format 4/3 est conçu pour être utilisé avec une caméra de type à balayage vertical de l'image.

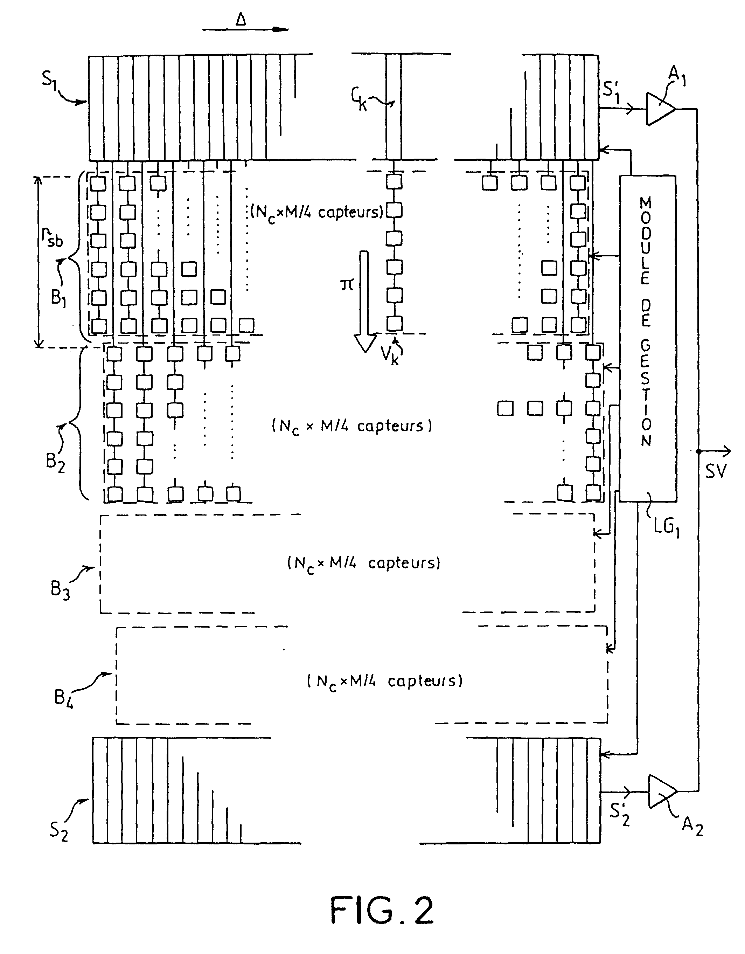

Un exemple de caméra adaptée à ce standard comporte une barrette du type de celle décrite dans la demande de brevet publiée FR-2 692 423 déjà citée. Le schéma de base d'une telle barrette est représenté en vue partielle sur la figure 2. Il comporte M = 1024 voies de détection réparties en quatre sous-blocs, B1 à B4, chaque voie $V_k$ de chaque sous-bloc (k variant de 1 à 256) étant constituée de $N_c$ = 8 capteurs alignés selon la direction verticale $\Pi$ du balayage et distants du pas capteur $p_c$. Chaque sous-bloc est donc constitué d'une matrice de $N_c$ lignes pour $\frac{M}{4}$ colonnes de capteurs. Dans cet exemple schématisé de réalisation, les capteurs ont une forme sensiblement carrée, de côté de longueur approximativement égale à 25 μm, et le pas capteur est pris égal à deux fois la longueur d'un côté de capteur.

Les capteurs d'une même voie $V_k$ sont reliés à une même cellule $C_k$ d'un registre de sommation à décalage. Un module de logique de gestion LG pilote les paramètres de temps liés au traitement des charges délivrées par la barrette de détection (injection, intégration et sommation) et au balayage opto-mécanique de cette barrette.

Afin d'obtenir une structure régulière, les voies $V_k$ de détection de chaque sous-bloc sont distantes les unes des autres selon la direction horizontale $\Delta$ d'un pas égal au pas capteur $p_c$, soit deux fois la longueur d'un côté de capteur. Les sous-blocs sont juxtaposés et décalés les uns des autres selon cette direction $\Delta$ d'une distance égale à une demi-longueur de capteur pour que la loi d'échantillonnage de Shannon soit globalement respectée. Pour des raisons d'encombrement, les sous-blocs ainsi juxtaposés sont regroupés par deux, $B_1$ et $B_2$ d'une part et $B_3$ et $B_4$ d'autre part, avec un décalage égal à une longueur de côté de capteur, entre chaque sous-bloc de chaque regroupement. Les deux sous-blocs d'un même regroupement sont alors reliés à un même registre à décalage, $S_1$ ou $S_2$. En sortie des registres de décalage, les données $S'_1$ ou $S'_2$ sont mélangées après amplification à travers les amplificateurs $A_1$ et $A_2$, pour fournir le signal de sortie SV.

Dans ces conditions, l'image optique formée sur la barrette par le système opto-mécanique de projection possède des caractéristiques - dimensions (largeur Li, hauteur Hi), nombre de lignes utiles par trame d'image Ni (une image étant formée de deux trames entrelacées), période trame Tt, distance interligne par trame (égale au pas pixel $p_p$) - dont des exemples de valeurs, adaptées pour le standard CCIR 625 lignes, sont rassemblées dans le tableau I suivant:

TABLEAU I

| Li (μm) | Mi (μm) | Ni (μm) | Tt (ms) | $P_p$ (μm) |
|---------|---------|---------|---------|------------|
| 12 812  | 9 609   | 288     | 20      | 33,4       |

Pratiquement, le rendement de défilement linéaire du miroir de balayage d'image étant par exemple de 80%, le rendement effectif de balayage $\rho_b$ vaut, en fonction de la valeur de la hauteur de la barrette Hb:

$$\rho_b = \frac{0,8 \, Hi}{(Hi + Hb)}$$

De plus, dans cet exemple, la distance de lecture $D_l$ peut être calculée en fonction des autres paramètres d'après la relation élémentaire suivante, en sachant que le pas capteur utilisé $p_{min}$ est le plus proche possible de la limite technologique, supposée par exemple égale à 45 μm, et que le temps de lecture global $T_l$ alloué au transfert des charges vaut 3 μs:

$$D_l = \frac{T_l Ni\ p_{min}}{\rho_b\ Tt} \approx 3\mu m$$

Afin de déterminer la valeur optimale du pas capteur et la raison "r" correspondante, qui va conditionner l'ordre optimal de déclenchement des cycles d'injection-intégration pour les différents capteurs d'une même voie de détection, il est possible d'appliquer dans la pratique la chaîne de sélections suivantes à chaque cas particulier:

- plage de valeurs prédéterminée de la longueur fictive de la voie de détection possible à prendre en considération, ce qui se traduit par un nombre de capteurs $K_c$ correspondant à la période de coïncidence entre les positions des capteurs et des pixels considérés comme deux suites infinies;
- valeurs correspondantes de la distance de lecture $D_l$ prise égale à sa limite supérieure, c'est-à-dire égale à la distance $D_{min}$ (conformément à la relation (3)), ces valeurs étant obtenues à partir de la relation (1) connaissant $p_p$ et $K_c$;
- valeurs correspondantes du pas capteur $p_c$, obtenues à partir de la relation (1) et des valeurs de $p_p$, $K_c$ et $K_p$ ($K_p$ ayant la première valeur supérieure à $K_c$ qui donne à $p_c$ une valeur supérieure à la valeur minimale $p_{min}$ prise dans cet exemple égale à 45µm);
- valeurs déduites du rang $U_1$ du premier capteur à partir de la relation (2) (en sachant que $D_1 = p_p - p_c$) et de la raison "r" à partir de la relation (4).

Dans le cadre de ce premier exemple de réalisation, les différentes valeurs des paramètres caractéristiques étudiés ($K_c$, $D_l$, $p_c$, $U_1$, r) déterminées selon la chaîne de sélection précédente, sont rassemblées dans le tableau II suivant:

TABLEAU II

| $K_c$ | $D_l$ (µm) | $p_c$ (µm) | $U_1$ | r |
|---|---|---|---|---|
| 9 | 3,713 | 48,27 | 4 | 7 |
| 10 | 3,342 | 46,78 | 4 | - |
| 11 | 3,038 | 45,57 | 4 | 3 |
| 12 | 3,785 | 47,34 | 5 | 5 |
| 13 | 2,57 | 46,27 | 5 | 8 |

Ainsi, pour cet exemple de réalisation, le cas le plus favorable pour lequel le pas capteur $p_c$ se rapproche le plus de la limite technologiquement imposée (45 µm), est donné par un nombre de capteurs fictifs égal à 11 par voie de détection, et conduit à choisir un pas capteur de longueur effective égale à 45,6 µm (compte tenue d'une précision de 0,1 µm). Etant donné que cette dernière valeur s'écarte légèrement de la valeur limite, le respect du format 4/3 du standard CCIR peut encore être obtenu en adaptant le nombre de capteurs disposés selon la direction $\Delta$ perpendiculaire à la direction verticale de balayage $\Pi$. Ceci peut entraîner une très légère anamorphose de l'image, qui reste négligeable devant les distortions et aberrations des systèmes optiques.

De manière plus générale, les dimensions d'une barrette de ce type sont conditionnées par celles des sous-blocs et du pas $p_{sb}$ de ces sous-blocs selon la direction $\Pi$. La mise en phase temporelle impose que leur pas soit, d'une part, supérieur ou égal à la hauteur d'une voie de détection et, d'autre part, égal à un multiple entier $\nu$ du pas ligne $p_p$ de l'image finale. Ceci se traduit par l'inégalité suivante:

$$p_c\ (N_c - 1) + p_{min} < \nu p_p\ (= p_{sb})$$

L'application numérique de cette relation à l'exemple précédent, avec $p_c = 45,6$ µm, $N_c = 8$, $p_{min} = 45$ µm, $p_p = 33,4$ µm), fournit la valeur de m, égale à 11, donc la valeur du pas sous-bloc $p_{sb}$ et celle de la hauteur de la barrette Hb. L'ensemble des valeurs des caractéristiques spatio-temporelles liées à la barrette B de cet exemple de réalisation: $N_c$, $K_c$, $p_{sb}$, $p_c$, $N_{tdi}$, Hb, $\rho_b$, Ti (durée de cycle d'intégration), Vb (vitesse de balayage) et $T_l$, sont rassemblées dans le tableau III suivant, qui donne également, à titre de comparaison, les valeurs de ces mêmes caractéristiques obtenues avec une barrette équivalente de l'art antérieur $B_0$, possédant un pas capteur égal à un multiple entier du pas pixel (compte tenu de la valeur minimale du pas capteur, 45 µm, et de celle du pas pixel, 33,4 µm, le pas capteur est pris égal au double du pas pixel):

TABLEAU III

|  | $N_c$ | $K_c$ | $p_{bs}$ (µm) | $p_c$ (µm) | $N_{tdi}$ | $p_b$% | $T_i$ (µs) | $V_b$(m/s) | $T_i$ (µs) |
|---|---|---|---|---|---|---|---|---|---|
| B | 8 | 11 | 367,6 | 45,6 | 10 | 69,5 | 48,3 | 0,692 | 4,39 |
| $B_o$ | 8 | - | 534,7 | 66,8 | 16 | 65,6 | 45,6 | 0,682 | 5,7 |

Il ressort en particulier de ce tableau que la détection par répartition optimisée des cycles d'intégration, obtenue par la mise en oeuvre d'un pas capteur de longueur supérieure au pas pixel (de différence égale à une fraction de celui-ci), permet de réduire le nombre d'étages de sommation dans le plan focal de près de 40% (en passant de 16 à 10). Cette réduction entraîne une diminution importante de la surface totale du circuit de lecture formé par les circuits de transfert et de sommation, et donc une économie sur la puissance dissipée. D'autre part, il est à noter une amélioration sensible (plus de 3%) du rapport signal/bruit mesuré à partir des valeurs des rendements de balayage (ou d'une amélioration de la portée d'environ 10% à résolution égale).

Il peut être également souhaitable d'augmenter la résolution de l'image dans la direction du balayage, c'est-à-dire d'obtenir un grandissement selon cette direction. Cette augmentation de résolution est réalisée classiquement par un mode dit de sous-balayage: durant une période trame, une partie seulement de l'image est balayée et la vitesse de balayage est réduite proportionnellement.

Avec un détecteur classique, et en raison du synchronisme nécessaire entre le pas pixel et le pas capteur, cette fonction ne peut être réalisée que dans le cas où le rapport entre le pas capteur et le pas pixel du détecteur est égal, en mode de balayage normal, à un multiple entier du grandissement recherché. Pour un détecteur selon l'invention, le pas capteur est "décorrélé" de la valeur de grandissement recherchée. La conséquence d'un changement de grandissement d'image ne concerne que l'ordre de lecture des capteurs, dont les paramètres de base de la série arithmétique d'ordre de lecture, $U_{1g}$ pour le premier capteur et la raison "$r_g$", valent en fonction du pas pixel $p_{pg}$ correspondant au grandissement g recherché:

$$U_{1g} = \frac{(p_c - p_{pg})}{D_I}$$

et

$$r_g = \frac{(nK_c + 1)}{U_{1g}}$$

Par exemple, en utilisant une barrette du type décrit précédemment, et en appliquant un facteur de grandissement égal à 2, les paramètres de base de la série arithmétique d'ordre de lecture valent $U_1$ = 19 et r = 7. Dans le tableau IV suivant, sont rassemblées les valeurs de pas capteur $p_c$ et de nombre de sommateurs par voie $N_{tdi}$, respectivement pour un détecteur du type B selon l'invention et pour un détecteur classique $B_0$, dans le cas d'un grossissement égal à 2 et d'un pas pixel de 16,7 µm:

|  | $p_c$ (µm) | $p_p$ (µm) | $N_{tdi}$ |
|---|---|---|---|
| B | 45,6 | 16,7 | 20 |
| $B_0$ | 66,5 | 16,7 | 32 |

TABLEAU IV

En mode de sous-balayage, le procédé selon l'invention présente un intérêt accru par l'écart croissant sur le nombre de sommateurs requis pour la fonction TDI, lorsque le grandissement recherché croît également. De plus le calcul des rendements de balayage en fonction du grandissement montre, avec un détecteur classique, une diminution proportionnelle au grandissement due à la croissance du pas capteur, alors qu'il reste quasi-constant avec un détecteur mettant en oeuvre le procédé selon l'invention.

L'optimisation des performances obtenue par le procédé selon l'invention peut également être exploitée pour rendre compatible, dans le cas d'une barrette de détection à balayage vertical, la mise en oeuvre de plusieurs standards de télévision. Le procédé consiste à rechercher la valeur optimale, c'est-à-dire la plus proche de la valeur technologiquement possible, du pas capteur commun à tous les standards en question, puis à déduire les valeurs des caractéristiques d'ordre de lecture correspondants à chacun de ces standards. De telles valeurs peuvent être obtenues en dressant des tableaux du type du tableau II correspondant au standard CCIR. Par exemple une recherche de pas capteur optimum pour le standard "525 lignes US" en utilisant une barrette de mise en oeuvre de l'invention du type décrite précédemment, peut se présenter sous la forme du tableau V suivant:

TABLEAU V

| $K_c$ | $D_I$ ($\mu$m) | $p_c$ ($\mu$m) | $U_1$ | r |
|---|---|---|---|---|
| 9 | 4,403 | 40,48 | 2 | 5 |
| 10 | 3,962 | 47,55 | 2 | - |
| 11 | 3,6 | 46,83 | 2 | 6 |
| 12 | 3,3 | 46,23 | 2 | - |
| 13 | 3,048 | 45,72 | 2 | 7 |
| 14 | 2,83 | 45,285 | 2 | - |
| 15 | 2,64 | 44,91 | 2 | 9 |

En comparant les tableaux II et V, la compatibilité entre les standards "625 lignes CCIR" et "525 lignes US" peut être obtenue en prenant une valeur de pas capteur optimale commune égale à 45,6 $\mu$m. La détermination du pas des sous-blocs $P_{sb}$ se fait en déterminant le plus petit commun multiple des pas lignes de chacun des standards supérieur à la hauteur d'une voie de détection; cette détermination est obtenue à partir de la valeur du facteur entier $\kappa$ tel que:

$$P_{sb} = \kappa P_{sb} \text{ (CCIR)} \frac{p_p \text{ (US)}}{p_p \text{ (CCIR)}} \approx 435,875 \ \mu m$$

Une telle adaptation entraîne une imperceptible anamorphose sur le résultat final. Le tableau VI suivant rassemble les sélections des valeurs des différents paramètres pour chacun des standards à partir d'une mise en oeuvre commune réalisée avec une barrette selon l'invention, présentant un pas capteur égal à 45,6 $\mu$m, un pas sous-bloc égal à 435,875 $\mu$m et un rendement de balayage de 68,3 %:

TABLEAU VI

| Standard | $p_p$ ($\mu$m) | $N_c$ | $K_c$ | $N_{tdi}$ | $T_i$ ($\mu$s) | $V_b$ (m/s) | $T_I$ ($\mu$s) |
|---|---|---|---|---|---|---|---|
| CCIR | 33,42 | 288 | 8 | 10 | 47,4 | 0,709 | 4,31 |
| US | 39,625 | 243 | 13 | 8 | 46,8 | 0,882 | 3,6 |

La mise en oeuvre d'un détecteur réalisé selon le procédé de l'invention est complétée ci-après par la description d'un exemple de circuit de gestion de commande, intégré au plan focal de la caméra et réalisé préférentiellement en technologie CMOS. Ce circuit de gestion comporte un ensemble de circuits logiques pour effectuer une lecture séquentielle répartie des capteurs élémentaires, et à permettre un fonctionnement multimode du détecteur adapté à différents modes de balayage et à différents standards.

D'après ce qui précède, la réduction du pas capteur d'une même voie de détection, selon le procédé de l'invention, impose une relation univoque entre l'ordre de lecture des capteurs et le choix d'un mode de fonctionnement (balayage, standard). Cette relation entraîne alors un agencement de structure apte à gérer l'ensemble des chronogrammes relatifs aux cycles de transfert d'information (intégration, sommation, lecture et réinitialisation) et de formation du signal vidéo.

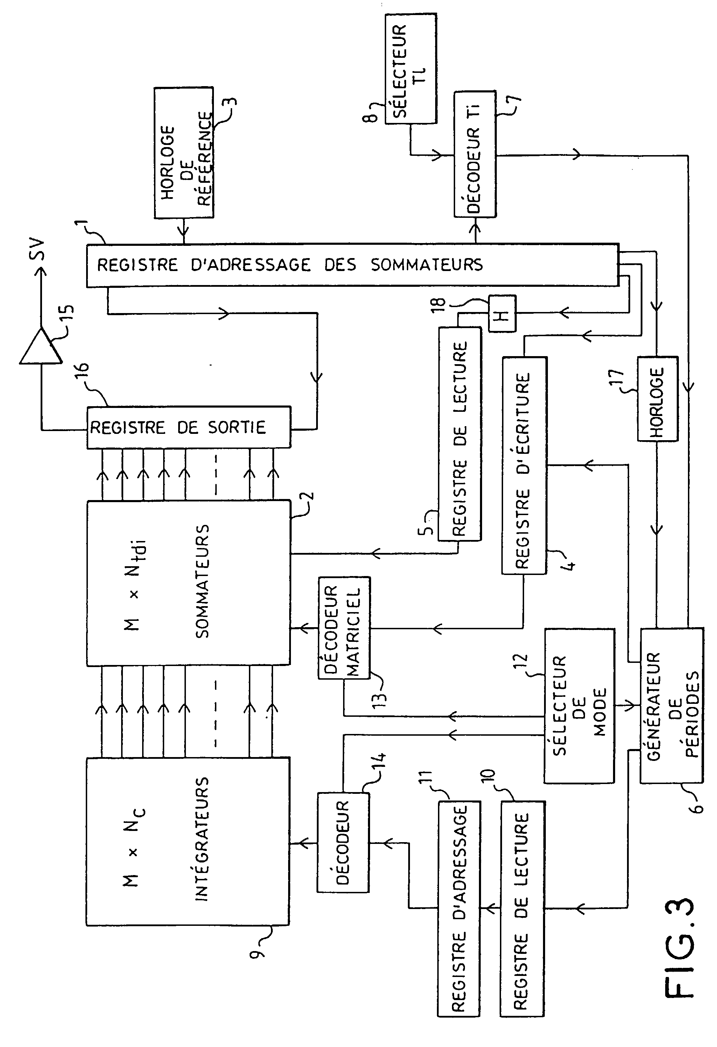

La figure 3 illustre un exemple de réalisation d'un tel circuit de gestion intégré au plan focal du détecteur. Dans cet exemple, les références temporelles sont fournies par un registre à décalage 1. La résolution temporelle de ce registre 1 est donnée par la demi-période d'une horloge de référence 3, ou encore par le rapport entre la durée d'un cycle d'intégration $T_i$ des charges définissant un signal d'échantillonage de pixel et le nombre de bits du registre.

Le registre 1 est couplé aux registres d'écriture 4 et de lecture 5 des registres 2 de sommateurs TDI, et à un générateur 6 de périodes de cycle d'intégration $T_i$, par l'intermédiaire d'un décodeur 7 piloté par un sélecteur 8 de temps de lecture par transfert $T_l$ ($T_l$ comprend la période d'intégration $T_i$ et le temps alloué à la réinitialisation). Le générateur de période d'intégration 6 pilote les registres de sommation 2 et les intégrateurs 9 des charges délivrées par les capteurs à travers, respectivement, le registre d'écriture 4 pour le registre de sommation 2, et un registre à décalage de lecture et de réinitialisation 10 couplé à un registre démultiplexeur 11 pour les intégrateurs 9.

Le circuit de gestion comporte également un sélecteur de mode 12 (balayage, standard) qui est couplé au générateur de période d'intégration 6, et active des décodeurs 13 et 14 appliqués en sortie, respectivement, du registre d'écriture 4 et du registre ddémultiplexeur 11.

Dans ces conditions, les cinq registres 1, 10, 11, 4 et 5 fournissent un exemple de structure de base pour la gestion des chronogrammes des cycles de transfert d'information concernant l'intégration, la sommation, la lecture et la réinitialisation des signaux d'échantillonnnage issus des capteurs afin de former, au cours du temps, un signal video compatible d'un mode de balayage et d'un standard donnés.

Le premier registre 1 est dédié plus précisément à l'adressage séquentiel des registres de sommateurs 2 arrivés en fin de cycle d'analyse et à la formation du signal video SV, après amplification en 15, par activation du registre de sortie 16. Le premier registre 1 est dimensionné pour pouvoir incrémenter les impulsions nécessaires aux autres registres 10, 11, 4 et 5 selon le schéma de fonctionnement détaillé ci-après.

Le registre à décalage 10, comporte un nombre suffisant de cellules pour réaliser la couverture d'un cycle complet de lecture et réinitialisation de l'ensemble des $M \cdot N_c$ intégrateurs 9, correspondant aux $N_c$ capteurs réparties sur M voies de détection. Ce deuxième registre génère les instants de lecture et de réinitialisation de chacun des intégrateurs 9, ces instants étant réglés par le générateur de périodes d'intégration 6 piloté par le premier registre 1 à travers une horloge de synchronisation 17.

Les commandes issues du deuxième registre 10 sont démultiplexées par le troisième registre 11 associé au décodeur 14 pour être appliquées dans l'ordre défini par le mode de fonctionnement, tels que ceux illustrés par les exemples précédents, aux différents différents intégrateurs 9.

Le quatrième registre 4 permet, en association avec la matrice de décodage 13, d'adresser chacun des $N_{tdi}$ sommateurs de chacune des M voies de détection à la collecte des signaux d'échantillonnage délivrés par les capteurs d'une même voie et affectés à la formation d'un même pixel. Le nombre $N_{tdi}$ de sommateurs activés par voie de détection et défini par le sélecteur de mode 12, dépend du mode de fonctionnement comme illustré par les exemples précédents.

Enfin le cinquième registre 5, incrémenté par une impulsion issue des derniers bits du premier registre, sélectionne successivement les sommateurs 2 en fin de cycle de formation de pixel et autorise leur lecture séquentielle pour l'élaboration du signal vidéo SV. Il incrémente ensuite leur réinitialisation, puis les affecte au traitement des signaux d'échantillonnage relatifs à chaque nouveau pixel.

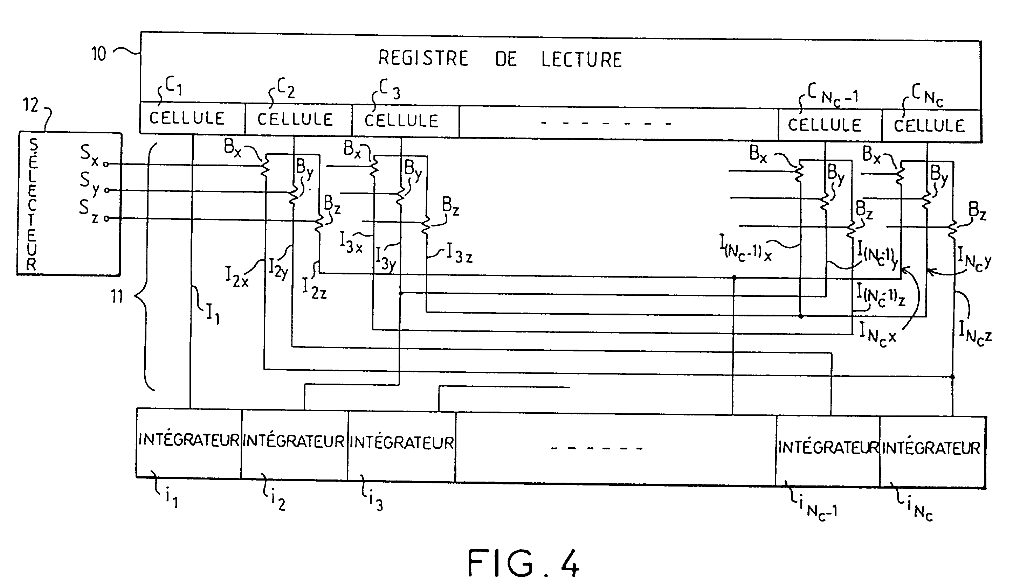

La figure 4 illustre plus précisément un exemple de registre d'adressage 11 et de registre de lecture 10 des charges délivrées par les $N_c$ capteurs d'une voie de détection, pendant une durée d'exposition, puis intégrées, lorsque le nombre de standards pouvant être sélectionné est à titre d'exemple non limitatif égal à trois. Le registre de lecture et de réinitialisation 10 est un registre à décalage comportant également $N_c$ étages, qui peuvent totalement ou partiellement utilisés. Les charges injectées par des circuits d'injection dans les intégrateurs $i_1$, $i_2$, ..., $i_{Nc-1}$, $i_{Nc}$, sont traduites en niveau de tension dans les cellules $C_1$, $C_2$, ..., $C_{Nc-1}$, $C_{Nc}$, grâce à des liaisons de transfert $I_1$, $I_{2x}$, $I_{2y}$, $I_{2z}$, $I_{3x}$, $I_{3y}$, $I_{3z}$, ..., $I_{(Nc-1)x}$, $1_{(Nc-1)y}$, $I_{(Nc-1)z}$, $I_{(Nc)x}$, $I_{(Nc)y}$, $I_{(Nc)z}$; le choix entre les liaisons est défini par le choix d'un standard, $S_x$, $S_y$, ou $S_z$, sélectionné à partir du sélecteur 12. La sélection de $S_x$, $S_y$, ou $S_z$, se traduit par l'activation série de l'une des trois bobines, respectivement $B_x$, $B_y$, ou $B_z$, disposées sur chacune des trois liaisons qui relie chacune des cellules du registre à décalage 10 à l'intégrateur dont le rang de lecture correspond, pour le standard sélectionné, au numéro de la cellule de la liaison considérée. L'ensemble de ces liaisons $I_1$ à $I_{(Nc)z}$ forme le registre d'adressage 11.

**Revendications**

1. Procédé de détection à cycles d'intégration et de lecture répartis pour caméra à balayage selon une direction donnée $(\Delta, \Pi)$ destinée à former une image composée de pixels espacés d'un pas $p_p$ de valeur correspondant à un standard prédéterminé, ladite caméra comportant une barrette de plusieurs rangées de capteurs élémentaires $(C_i)$ disposées selon une direction orthogonale à la direction de balayage, les capteurs de rangées différentes et alignés selon la direction de balayage définissant une voie $(V_k)$ de détection TDI, chaque voie de détection $(V_k)$ comportant un circuit d'injection et d'intégration des charges délivrées par chaque capteur $(C_i)$ durant une durée d'exposition et formant un signal d'échantillonnage, et un circuit de lecture à sommateurs pour cumuler les signaux d'échantillonnage correspondant à un même pixel, le procédé étant caractérisé en ce qu'on choisit une valeur de pas spatial pour les capteurs $(p_c)$ d'une même voie de détection qui diffère de celle du pas pixel $(p_p)$ d'une fraction de celui-ci telle qu'une coïncidence capteur-pixel, qui est réalisée pour un capteur de référence $(C_0)$, n'a plus lieu pour tout autre capteur exposé au même champ de vue élémentaire, et en ce qu'on inscrit dans chaque sommateur, entre deux lectures successives de chaque capteur, l'information issue du circuit d'intégration associé.

**2.** Procédé de détection selon la revendication 1, caractérisé en ce que le nombre $N_c$ de capteurs mis en oeuvre par voie de détection reste inférieur à $K_c$, $K_c$ correspondant à un nombre fictif de capteurs pour lequel il y a coïncidence périodique des cycles d'injection-intégration, un capteur ($C_i$), différent du capteur de référence ($C_0$), présentant ainsi un décalage spatial ($D_i$) de position jamais nulle, telle que repérée par rapport à une position ($P_i$) du pixel à échantillonner le plus proche.

**3.** Procédé selon l'une quelconque des revendications 1 ou 2, caractérisé en ce que les capteurs ($C_i$) sont classés suivant un ordre fonction de la valeur croissante de leur décalage par rapport au pixel le plus proche, obtenu après normalisation par une valeur de décalage minimale ($D_{min}$), en ce que ce classement détermine l'ordre de lecture des différents cycles d'injection-intégration des différents capteurs d'une même voie de détection, définissant une répartition des cycles d'intégration, cet ordre étant déterminé par les valeurs successives des termes $U_i$ d'une progression arithmétique de raison r telle que:

$$U_i = i \cdot r \qquad \text{modulo } K_c$$

**4.** Procédé selon la revendication 3, caractérisée en ce que la raison r est déterminée en fonction du décalage $D_1$ du premier capteur ($C_1$) par la relation:

$$r = \frac{(nK_c + 1)D_{min}}{D_1}$$

n étant un entier adapté

**5.** Procédé selon l'une quelconque des revendications 2 à 4, caractérisé en ce que la valeur du pas capteur ($p_c$) est telle que la distance minimale $D_{min}$ est limitée d'une part par un espace $D_l$ correspondant à une lecture en cours et, d'autre part, inférieure au décalage maximale:

$$D_l < D_{min} < \frac{(p_p - D_l)}{(N_c - 1)}$$

**6.** Procédé selon la revendication3, caractérisé en ce que l'ordre de lecture des circuits de sommation pour la formation, par accumulation des charges, du signal de luminance destiné à chaque pixel commence par la lecture du capteur de rang le plus élévé possible défini selon la progression arithmétique $U_i$.

**7.** Procédé selon l'une des revendications précédentes, caractérisé en ce que le nombre de signaux d'échantillonnage affectés à la formation d'un pixel, égal au nombre minimal d'étages de sommation par voie de détection est égal à la partie entière de la quantité $(N_c - 1)p_c/p_p$.

**8.** Barrette de détection pour la mise en oeuvre du procédé selon l'une quelconque des revendications précédentes, comportant plusieurs rangées de capteurs pour couvrir une hauteur d'image de scène projetée et balayée par la barrette, chaque rangée constituant une voie de détection ($V_k$) comprenant un même nombre utile ($N_c$) de capteurs ($C_i$) alignés suivant une direction de balayage ($\Delta$) avec un pas spatial ($p_c$), chaque voie de détection ($V_k$) étant destinée à former des pixels d'une ligne d'image ($L_k$) à partir des signaux d'échantillonnage délivrées par les capteurs au cours du balayage, ces signaux sont d'abord injectés, intégrés puis lus pour être cumulés séquentiellement par des circuits de traitement de type TDI dans le plan focal de la barrette et enfin mis en forme dans un circuit de gestion pour constituer un signal vidéo compatible avec un standard de pas pixel déterminé $p_p$, la barrette étant caractérisée en ce que le pas capteur $p_c$ se différencie du pas pixel $p_p$ d'une valeur égale à une fraction de ce dernier de sorte qu'une coïncidence capteur-pixel n'a lieu que pour un capteur de référence ($C_0$) et pour un capteur fictif correspondant à un nombre $K_c$ fictif de capteurs par voie de détection supérieur au nombre utile et définissant un pas de coïncidence spatio-temporel $P_{st}$ entre les capteurs et les pixels tel que:

$$P_{st} = K_p p_p = K_c p_c$$

$K_p$ et $K_c$ étant deux entiers

**9.** Barrette selon la revendication 8 utilisée pour une caméra à balayage vertical, caractérisée en ce que les voies de détection sont réparties en quatre sous-blocs (B1 à B4), chaque voie ($V_k$) de chaque sous-bloc étant constituée de capteurs alignés selon la direction verticale ($\Pi$) du balayage et distants du pas capteur $p_c$ pris égal à approximativement deux fois la longueur d'un côté de capteur, en ce que les capteurs d'une même voie ($V_k$) sont reliés à une même cellule ($C_k$) d'un registre de sommation, en ce qu' un module de logique de gestion (LG) pilote les paramètres de temps liés au traitement des charges délivrées par la barrette de détection, en ce que les voies ($V_k$) de détection de chaque sous-bloc sont distantes les unes des autres selon la direction horizontale ($\Delta$ ) d'un pas égal au pas capteur $p_c$, en ce que les sous-blocs sont décalés les uns des autres selon cette direction ($\Delta$) d'une distance approximativement égale à une demi-longueur de capteur Pour des raisons d'encombrement et sont groupés par deux, avec un décalage égal à une longueur de côté de capteur, chacune des voies de détection successives ($V_k$, $V_{k+1}$) des deux sous-blocs d'un même regroupement pouvant alors être reliées alternativement à un même registre à décalage $S_1$ ou $S_2$, et en ce que la valeur du pas capteur $p_c$ est donnée par la relation $K_p p_p = K_c p_c$ en donnant à $K_p$ la première valeur supérieure à $K_c$ qui donne à $p_c$ une valeur supérieure à la valeur minimale $P_{min}$ fournie par la technologie utilisée.

**10.** Procédé selon l'une quelconque des revendications 1 à 7, appliqué à la modulation de balayage pour une augmentation de résolution d'image dans la direction de balayage par balayage d'une partie de l'image et réduction proportionnelle de la vitesse de balayage, correspondant à un grandissement selon cette direction, caractérisé en ce que l'ordre de lecture des capteurs est choisi en fonction de la valeur du grandissement g souhaitée, les paramètres de base de la série arithmétique d'ordre de lecture correspondante, $U_{1g}$ pour le premier capteur et la raison "$r_g$", valent en fonction du pas pixel $p_{pg}$ correspondant au grandissement g recherché:

$$U_{1g} = \frac{(p_c - p_{pg})}{D_l}$$

et

$$r_g = \frac{(nK_c + 1)}{U_{1g}}$$

**11.** Procédé selon l'une quelconque des revendications 1 à 7, appliqué à une utilisation multistandard, caractérisé en ce qu'on recherche la valeur commune à plusieurs standards du pas capteur optimal d'une barrette à balayage vertical, puis on déduit les valeurs des caractéristiques, $U_1$ et r, afin de définir chacune des progressions arithmétiques permettant d'établir l'ordre de lecture des capteurs correspondants à chacun de ces standards.

**12.** Barrette du type à sous-blocs selon la revendication 9 pour la mise en oeuvre du procédé selon la revendication 11 appliqué au multistandard, caractérisé en ce que la détermination du pas des sous-blocs $P_{sb}$ se fait en déterminant le premier des communs multiples des pas lignes de chacun des standards supérieur à la hauteur d'une voie de détection, à partir de la valeur du facteur entier $\kappa$ tel que:

$$P_{sb} = \kappa P_{sb}(CCIR) \frac{p_p (US)}{p_p(CCIR)}$$

et en ce que les valeurs des différents paramètres caractéristiques pour chacun des standards, tels que le pas pixel, le nombre ($N_c$) de capteurs par voie de détection, le nombre ($N_{tdi}$) d'étages de sommation par voie de détection, les temps d'intégration ($T_i$) et de transfert global ($T_l$) des charges et la vitesse de balayage ($V_b$) pour chacun des standards sont sélectionnées à partir des valeurs communes du pas capteur ($p_c$) et du pas sous-bloc ($p_{sb}$).

**13.** Ensemble comportant un circuit de gestion et une barrette de détection selon la revendication 8, le circuit de gestion étant intégré au plan focal de la barrette de détection et comportant un premier registre (1) couplé à des registres d'écriture (4) et de lecture (5) des registres (2) de sommateurs TDI, et à un générateur (6) de périodes de cycle d'intégration ($T_i$) par l'intermédiaire d'un décodeur (7) piloté par un sélecteur (8) de temps de lecture par transfert ($T_I$), en ce que le générateur de période d'intégration (6) pilote les registres de sommation (2) et les intégrateurs (9) des charges délivrées par les capteurs à travers, respectivement, le registre d'écriture (4) pour le registre de sommation (2) et un registre de lecture et de réinitialisation (10) couplé à un registre démultiplexeur (11) pour les intégrateurs (9).

**14.** Ensemble comportant un circuit de gestion selon la revendication 13 et une barrette selon la revendication 12, et comportant également un sélecteur de mode (12) de balayage et de standard couplé au générateur de période d'intégration (6), caractérisé en ce que ce sélecteur (12) active des décodeurs (13) et (14) appliqués en sortie, respectivement, du registre d'écriture (4) et du registre démultiplexeur (11).

**15.** Ensemble selon l'une des revendications 13 ou 14, caractérisé en ce que le premier registre (1), le registre de lecture et de réinitialisation (10), le registre démultiplexeur (11), et les registres d'écriture (4) et de lecture (5) forment une structure de base pour la gestion des cycles de transfert d'information concernant l'intégration, la sommation, la lecture et la réinitialisation des signaux d'échantillonnnage issus des capteurs afin de délivrer, au cours du temps, un signal video compatible d'un mode de balayage et d'un standard donnés, en ce que le premier registre (1) est un registre à décalage dédié à l'adressage séquentiel des registres de sommateurs (2) arrivés en fin de cycle d'analyse et à la formation du signal video (SV) par activation du registre de sortie (16) étant dimensionné pour incrémenter les impulsions nécessaires aux autres registres (10, 11, 4 et 5), en ce que le registre de lecture et de réinitialisation (10) est également un registre à décalage permettant de réaliser la couverture d'un cycle complet de lecture et de réinitialisation de l'ensemble des intégrateurs (9) par réglage des instants de lecture et de réinitialisation par le générateur de périodes d'intégration (6) piloté par le premier registre (1), les commandes issues du registre de lecture et de réinitialisation (10) étant démultiplexées par le registre demultiplexeur (11) associé au décodeur (14) pour être appliquées dans l'ordre défini par le mode de fonctionnement aux différents intégrateurs (9), en ce que le registre d'écriture (4) permet, en association avec la matrice de décodage (13), d'adresser chacun des ($N_{tdi}$) sommateurs de chacune des voies de détection à la collecte des signaux d'échantillonnage délivrés par les capteurs d'une même voie et affectés à la formation d'un même pixel, le nombre $N_{tdi}$ de sommateurs activés par voie de détection étant défini par le sélecteur de mode (12), et en ce que le registre de lecture (5), incrémenté par le premier registre (1), sélectionne successivement les sommateurs (2) en fin de cycle de formation de pixel, autorise leur lecture séquentielle pour l'élaboration du signal vidéo (SV) et incrémente leur réinitialisation, puis les affecte au traitement des signaux d'échantillonnage relatifs à chaque nouveau pixel.

**16.** Ensemble selon l'une quelconque des revendications 14 ou 15, le circuit de gestion comportant un registre de lecture et de réinitialisation (10) qui comporte un nombre d'étages égal au nombre de capteurs par voie ($N_c$) pouvant être totalement ou partiellement utilisés, caractérisé en ce que les charges injectées par les circuits d'injection dans les intégrateurs ($i_1$, $i_2$, ..., $i_{Nc-1}$, $i_{Nc}$) sont traduites en niveau de tension dans les cellules ($C_1$, $C_2$, ..., $C_{Nc-1}$, $C_{Nc}$) grâce à des liaisons de transfert ($I_1$, $I_{2x}$, $I_{2y}$, $I_{2z}$, $I_{3x}$, $I_{3y}$, $I_{3z}$, ..., $I_{(Nc-1)x}$, $I_{(Nc-1)y}$, $I_{(Nc-1)z}$, $I_{(Nc)x}$, $I_{(Nc)y}$, $I_{(Nc)z}$) formant le registre d'adressage (11), en ce que le choix entre les liaisons est défini par le choix d'un standard ($S_x$, $S_y$, ou $S_z$) sélectionné à partir du sélecteur (12), la sélection du standard se traduisant par l'activation série de l'une des bobines ($B_x$, $B_y$, ou $B_z$) disposées sur chacune des liaisons qui relie chacune des cellules du registre à décalage (10) à l'intégrateur dont le rang de lecture correspond, pour le standard sélectionné, au numéro de la liaison considérée.

## Patentansprüche

**1.** Erfassungsverfahren für eine Kamera mit verteilten Integrations- und Lesezyklen und mit einer Abtastung gemäß einer vorgegebenen Richtung ($\Delta$, $\pi$), um ein aus Pixeln mit einem Rasterabstand $p_p$ entsprechend einer vorbestimmten Norm bestehendes Bild zu erzeugen, wobei die Kamera eine Erfassungsleiste mit mehreren Reihen von Elementarsonden ($C_i$) enthält, die gemäß einer zur Abtastrichtung senkrechten Richtung angeordnet sind, wobei die Sonden unterschiedlicher Reihen, die gemäß der Abtastrichtung fluchtend angeordnet sind, einen Kanal ($V_k$) zur TDI-Erfassung definieren und jeder Erfassungskanal ($V_k$) eine Injektions- und Integrationsschaltung für die von jeder Sonde ($C_i$) während einer Belichtungsdauer gelieferten Ladungen in Form eines Tastsignals sowie eine Leseschaltung mit Summiergliedern enthält, um die einem gegebenen Pixel entsprechenden Tastsignale zu summieren, dadurch gekennzeichnet, daß man einen Wert ($p_c$) für den Rasterabstand der Sonden eines gegebenen Erfassungskanals wählt, der von dem Rasterabstand ($p_p$) für die Pixel um einen Bruchteil dieses letzteren abweicht, sodaß eine Koinzidenz zwischen Sonde und Pixel, die für eine Bezugssonde ($C_0$) realisiert wird, für alle weiteren dem gleichen elementaren Blickfeld ausgesetzten Sonden nicht mehr stattfindet, und daß man in jedes Summierglied zwischen zwei aufeinanderfolgenden Lesephasen jeder Sonde die aus der zugeordneten Integrationsschaltung kommende Information einschreibt.

2. Erfassungsverfahren nach Anspruch 1, dadurch gekennzeichnet, daß die Anzahl $N_c$ von in einem Erfassungskanal vorhandenen Sonden unter dem Wert $K_c$ bleibt, der einer fiktiven Anzahl von Sonden entspricht, für die sich eine periodische Koinzidenz der Injektions- und Integrationszyklen ergibt, wobei eine Sonde ($C_i$) mit Ausnahme der Bezugssonde ($C_0$) somit eine räumliche Verschiebung ($D_i$) ihrer Position bezüglich der Position ($P_i$) des nächstliegenden zu tastenden Pixels aufweist, die nie null ist.

3. Verfahren nach einem beliebigen der Ansprüche 1 und 2, dadurch gekennzeichnet, daß die Sonden ($C_i$) gemäß einer Reihenfolge eingeordnet sind, die vom zunehmenden Wert ihrer Verschiebung bezüglich des nächstliegenden Pixels bestimmt wird, die nach Normierung durch einen Mindestverschiebewert ($D_{min}$) erhalten wird, und daß diese Einordnung die Lesereihenfolge der verschiedenen Injektions- und Integrationszyklen der verschiedenen Sonden eines Erfassungskanals und so eine Verteilung der Integrationszyklen definiert, wobei die Reihenfolge durch die aufeinanderfolgenden Werte der Terme $U_i$ einer arithmetischen Reihe mit der Differenz r bestimmt wird derart, daß gilt:

$$U_i = (i \cdot r)_{modulo\ Kc}$$

4. Verfahren nach Anspruch 3, dadurch gekennzeichnet, daß die Differenz r abhängig von der Verschiebung $D_1$ der ersten Sonde ($C_1$) durch folgende Beziehung bestimmt wird:

$$r = (nK_c+1)D_{min}/D_1$$

wobei n eine geeignete ganze Zahl ist.

5. Verfahren nach einem beliebigen der Ansprüche 2 bis 4, dadurch gekennzeichnet, daß der Wert des Rasterabstands ($p_c$) der Sonden so gewählt ist, daß der Mindestabstand $D_{min}$ einerseits durch eine Verschiebung $D_1$ entsprechend einem laufenden Lesevorgang begrenzt und andrerseits kleiner als die Maximalverschiebung ist:

$$D_1 < D_{min} < (p_p-D_1)/(N_c-1)$$

6. Verfahren nach Anspruch 3, dadurch gekennzeichnet, daß die Lesereihenfolge der Summierschaltungen für die Bildung des Helligkeitssignals durch Ladungsakkumulierung für jedes Pixel mit dem Lesen der Sonde mit dem höchstmöglichen Rang beginnt, die durch die arithmetische Reihe $U_i$ definiert ist.

7. Verfahren nach einem der vorstehenden Ansprüche, dadurch gekennzeichnet, daß die Anzahl von Tastsignalen für die Bildung eines Pixels, die der Mindestanzahl von Summierstufen je Erfassungskanal gleicht, dem ganzzahligen Teil der Größe $(N_c-1) \cdot p_c/p_p$ gleicht.

8. Erfassungsleiste zur Durchführung des Verfahrens nach einem beliebigen der vorstehenden Ansprüche, die mehrere Reihen von Sonden zur Überdeckung einer Teilhöhe des Bilds der Szene aufweist, die auf die Leiste projiziert und von ihr abgetastet wird, wobei jede Reihe einen Erfassungskanal ($V_k$) mit einer gleichen Nutzanzahl ($N_c$) von Sonden ($C_i$) in Flucht gemäß einer Abtastrichtung ($\Delta$) mit einem Abstandsraster ($p_c$) enthält und jeder Erfassungskanal ($V_k$) Pixel einer Bildzeile ($L_k$) ausgehend von den von den gerade abgetasteten Sonden gelieferten Tastsignalen bilden sollen, wobei diese Tastsignale zuerst injiziert, integriert und dann gelesen werden, um sequentiell durch Verarbeitungsschaltungen vom TDI-Typ in der Brennebene der Leiste kumuliert und dann in einer Verwaltungsschaltung geformt zu werden und ein Videosignal zu bilden, das mit dem Pixel-Rasterabstand $p_p$ einer bestimmten Norm kompatibel ist, dadurch gekennzeichnet, daß der Rasterabstand $p_c$ der Sonden sich von dem Rasterabstand $p_p$ der Pixel um einen Wert gleich einem Bruchteil dieses letztgenannten Abstands so unterscheidet, daß eine Koinzidenz zwischen Sonde und Pixel nur bei der Bezugssonde ($C_0$) und für eine fiktive Sonde stattfindet, die einer fiktiven Anzahl $K_c$ von Sonden je Erfassungskanal größer als der Nutzanzahl entspricht und ein Rastermaß der räumlich/zeitlichen Koinzidenz $P_{st}$ zwischen Sonden und Pixel definiert derart, daß gilt:

$$P_{st} = K_p \cdot p_p = K_c \cdot p_c$$

($K_p$ und $K_c$ sind zwei ganze Zahlen).

9. Leiste nach Anspruch 8 in Anwendung auf eine Kamera mit vertikaler Abtastung, dadurch gekennzeichnet, daß die Erfassungskanäle in vier Unterblöcke (B1 bis B4) unterteilt sind, wobei jeder Kanal ($V_k$) jedes Unterblocks von gemäß der vertikalen Abtastrichtung ($\pi$) fluchtend angeordneten Sonden gebildet wird, die einen Sondenrasterabstand $p_c$ etwa gleich dem doppelten Wert der Länge einer Kante einer Sonde besitzen, daß die Sonden eines gegebenen Kanals ($V_k$) an eine gemeinsame Zelle ($C_k$) eines Summierregisters angeschlossen sind, daß ein logischer Verwaltungsmodul (LG) die Zeitparameter steuert, die mit der Verarbeitung der von der Erfassungsleiste gelieferten Ladungen zusammenhängen, daß die Erfassungskanäle ($V_k$) jedes Unterblocks gegeneinander gemäß der horizontalen Richtung ($\Delta$) um ein Rastermaß gleich dem Rasterabstand $p_c$ der Sonden versetzt sind, daß die Unterblöcke gegeneinander in dieser Richtung ($\Delta$) um einen Abstand von etwa gleich einer halben Kantenlänge einer Sonde wegen des Raumbedarfs versetzt und paarweise gruppiert sind, nämlich innerhalb einer Gruppe gegenseitig um die Kantenlänge einer Sonde versetzt, wobei jeder der aufeinanderfolgenden Erfassungskanäle ($V_k$, $V_{k+1}$) der beiden Unterblöcke einer gemeinsamen Gruppe abwechselnd an ein gemeinsames Schieberegister $S_1$ oder $S_2$ angeschlossen sein können, und daß der Rasterabstand $p_c$ der Sonden durch die Gleichung

$$K_p \cdot p_p = K_c \cdot p_c$$

gegeben ist, wobei $K_p$ der erste Wert oberhalb von $K_c$ ist, der dem Rasterabstand $p_c$ der Sonden einen Wert oberhalb des durch die verwendete Technologie gegebenen Mindestwerts $p_{min}$ verleiht.

10. Verfahren nach einem beliebigen der Ansprüche 1 bis 7 in Anwendung auf die Modulation der Abtastung zugunsten einer Erhöhung der Bildauflösung in Abtastrichtung durch Abtastung eines Teils des Bilds und proportionale Verringerung der Abtastgeschwindigkeit entsprechend einer Vergrößerung in dieser Richtung, dadurch gekennzeichnet, daß die Reihenfolge des Auslesens der Sonden abhängig vom Wert der gewünschten Vergrößerung g gewählt wird, wobei die Basisparameter der arithmetischen Reihe für die entsprechende Reihenfolge des Auslesens $U_{1g}$ für die erste Sonde und die Differenz $r_g$ abhängig vom der gewünschten Vergrößerung g entsprechenden Rasterabstand $p_{pg}$ der Pixel folgende Werte besitzen:

$$U_{1g} = (p_c - p_{pg})/D_1$$

und

$$r_g = (nK_c + 1)/U_{1g}$$

11. Verfahren nach einem beliebigen der Ansprüche 1 bis 7 in Anwendung auf eine Mehrnormverwendung, dadurch gekennzeichnet, daß man den gemeinsamen Wert des optimalen Rasterabstands der Sonden einer Leiste mit vertikaler Abtastung für mehrere Normen sucht und dann die charakteristischen Werte $U_1$ und r ableitet, um jede der arithmetischen Reihen zu definieren und die Lese-Reihenfolge der jeder dieser Normen entsprechenden Sonden zu erstellen.

12. Leiste mit Unterblöcken gemäß Anspruch 9 für die Durchführung des Verfahrens nach Anspruch 11 für eine Mehrnorm-Anwendung, dadurch gekennzeichnet, daß die Bestimmung des Rastermaßes $P_{sb}$ der Unterblöcke durch Bestimmung des kleinsten gemeinsamen Vielfachen der Zeilenrasterabstände für jede der Normen oberhalb der Höhe eines Erfassungskanals ausgehend von dem ganzzahligen Wert $\kappa$ so erfolgt, daß gilt:

$$P_{sb} = \kappa \cdot P_{sb}(CCIR) \cdot p_p(US)/p_p(CCIR)$$

und daß die Werte der verschiedenen charakteristischen Parameter für jede der Normen, wie der Rasterabstand der Pixel, der Anzahl ($N_c$) von Sonden je Erfassungskanal, der Anzahl ($N_{tdi}$) von Summierstufen je Erfassungskanal, der Integrationszeit ($T_i$) und der globalen Ladungstransferzeit ($T_l$) sowie der Abtastgeschwindigkeit ($V_b$) für

**EP 0 738 074 B1**

jede der Normen ausgehend von gemeinsamen Werten des Rasterabstands ($p_c$) der Sonden und des Unterblock-Rastermaßes ($p_{sb}$) ausgewählt werden.

13. Einheit bestehend aus einer Verwaltungsschaltung und einer Erfassungsleiste nach Anspruch 8, wobei die Verwaltungsschaltung in die Brennebene der Erfassungsleiste integriert ist und ein erstes Register (1) enthält, das an Schreib- und Leseregister (4, 5) der Register (2) der TDI-Summierung und an einen Generator (6) für Integrationszyklusperioden ($T_i$) über einen Dekoder (7) gekoppelt ist, der von einer Wählschaltung (8) für die Lesezeit mittels Ladungstransfer gesteuert wird, daß der Generator (6) für Integrationszyklusperioden die Summierregister (2) und Integratoren (9) für von den Sonden über das Schreibregister (4) für das Summierregister (2) beziehungsweise ein Lese- und Neu-Initialisierungsregister (10) gelieferte Ladungen steuert, das an ein Demultiplexierregister (11) für die Integratoren (9) gekoppelt ist.

14. Einheit mit einer Verwaltungsschaltung nach Anspruch 13 und einer Leiste nach Anspruch 12 sowie außerdem einem Wählschalter für den Abtastmodus und die Fernsehnorm, der an den Integrationsperioden-Generator (6) gekoppelt ist, dadurch gekennzeichnet, daß dieser Wählschalter (12) Dekodierer (13, 14) aktiviert, die an den Ausgang des Schreibregisters (4) beziehungsweise des Demultiplexierregisters (11) angeschlossen sind.

15. Einheit nach einem der Ansprüche 13 und 14, dadurch gekennzeichnet, daß das erste Register (1), das Lese- und Neu-Initialisierungsregister (10), das Demultiplexierregister (11), das Schreibregister (4) und das Leseregister (5) eine Basisstruktur für die Verwaltung der Informationstransferzyklen betreffend die Integration, das Lesen und das Neu-Initialisieren der von den Sonden kommenden Tastsignale bilden, um im Verlauf der Zeit ein mit einem gegebenen Abtastmodus und einer gegebenen Norm kompatibles Videosignal zu liefern, daß das erste Register (1) ein Schieberegister ist, das der sequentielle Adressierung der Summierregister (2), die am Ende des Analysezyklus angekommen sind, sowie der Bildung des Videosignals (SV) durch Aktivierung des Ausgangsregisters (16) dient und so dimensioniert ist, daß es die für die anderen Register (10, 11, 4, 5) erforderlichen Impulse inkrementiert, daß das Lese- und Neu-Initialisierungsregister (10) ebenfalls ein Schieberegister ist, das einen vollständigen Lese- und Neu-Initialisierungszyklus der Gesamtheit der Integratoren (9) durch Regelung der Lese- und Neu-Initialisierungszeitpunkte durch den Integrationsperiodengenerator (6) realisieren kann, der vom ersten Register (1) gesteuert wird, wobei die aus dem Lese- und Neu-Initialisierungsregister (10) kommenden Steuerungen von dem dem Dekoder (14) zugeordneten Demultiplexierregister (11) demultiplexiert und in der durch den Betriebsmodus definierten Reihenfolge an die verschiedenen Integratoren (9) angelegt werden, daß das Schreibregister (4) in Verbindung mit der Dekodiermatrix (13) eine Adressierung jedes ($N_{tdi}$) der Summierglieder jedes Erfassungskanals bei der Sammlung der von den Sonden eines gegebenen Kanals gelieferten und der Bildung eines Pixels zugeordneten Tastsignale adressieren kann, wobei die Anzahl $N_{tdi}$ von aktivierten Summiergliedern je Erfassungskanal durch den Moduswählschalter (12) definiert ist, und daß das Leseregister (5), das vom ersten Register (1) inkrementiert wird, nacheinander die Summierglieder (2) am Ende des Zyklus zur Bildung eines Pixels auswählt, ihr sequentielles Auslesen für die Bildung des Videosignals (SV) und ihre Neu-Initialisierung erlaubt und sie dann der Tastsignalverarbeitung bezüglich jedes neuen Pixels unterwirft.

16. Einheit nach einem beliebigen der Ansprüche 14 und 15, in der die Verwaltungsschaltung ein Lese- und Neu-Initialisierungsregister (10) enthält, dessen Stufenanzahl der Anzahl ($N_c$) von Sonden je Kanal gleicht, die ganz oder teilweise genutzt werden, dadurch gekennzeichnet, daß die von den Injektionsschaltungen in die Integratoren ($i_1$, $i_2$, ..., $i_{Nc-1}$, $i_{Nc}$ injizierten Ladungen in den Zellen $C_1$, $C_2$ ..., $C_{Nc-1}$, $C_{Nc}$ in Spannungspegel mithilfe der Transferverbindungen $I_1$, $I_{2x}$, $I_{2y}$, $I_{2z}$, $I_{3x}$, $I_{3y}$, $I_{3z}$, ..., $I_{(Nc-1)x}$, $I_{(Nc-1)y}$, $I_{(Nc-1)z}$, $I_{(Nc)x}$, $I_{(Nc)y}$, $I_{(Nc)z}$ übersetzt werden, die das Adressenregister (11) bilden, daß die Wahl zwischen den Verbindungen durch die Wahl einer Norm ($S_x$, $S_y$, $S_z$) definiert wird, die am Wählschalter (12) festgelegt wird, wobei die Wahl der Norm zu einer Serienaktivierung einer der Spulen ($B_x$, $B_y$, $B_z$) führt, die sich in jeder der Verbindungen befinden, die jede der Zellen des Schieberegisters (10) mit dem Integrator verbindet, dessen Leserang für die ausgewählte Norm der Nummer der betrachteten Verbindung entspricht.

## Claims

1. Method of detection with distributed integration and read cycles for a scanning camera in a given direction ($\Delta, \Pi$) designed to form an image made up of pixels spaced out at a pitch pp of value corresponding to a predetermined standard, the said camera comprising an array of several rows of elementary sensors ($C_i$) arranged in a direction orthogonal to the scanning direction, the sensors of different rows and which are aligned in the scanning direction defining a TDI detection channel ($V_k$), each detection channel ($V_k$) comprising a circuit for injecting and integrating the charges delivered by each sensor ($C_i$) during an exposure period and forming a sampling signal, and a read circuit with summators for totalizing the sampling signals corresponding to one and the same pixel, the method being characterized in that a value of spatial pitch for the sensors ($p_c$) of one and the same detection channel is chosen which differs from that of the pixel pitch ($p_p$) by a fraction of the latter which is such that a sensor/pixel coincidence, which is achieved for a reference sensor ($C_0$), no longer occurs for any other sensor exposed to the same elementary field of view, and in that the information coming from the associated integration circuit is recorded, in each summator, between two successive readings of each sensor.

2. Method of detection according to Claim 1, characterized in that the number $N_c$ of sensors implemented per detection channel remains less than $K_c$, $K_c$ corresponding to a fictitious number of sensors for which there is periodic coincidence of the injection/integration cycles, a sensor ($C_i$), different from the reference sensor ($C_0$), thus having a spatial shift ($D_i$) of position that is never 0, as referenced with respect to a position ($P_i$) of the closest pixel to be sampled.

3. Method according to either one of Claims 1 and 2, characterized in that the sensors ($C_i$) are classified in an order that is a function of the increasing value of their shift with respect to the closest pixel, obtained after normalization by a minimum shift value ($D_{min}$), in that this classification determines the order of reading of the various injection/integration cycles of the various sensors of one and the same detection channel, defining a distribution of the integration cycles, this order being determined by the successive values of the terms $U_i$ of an arithmetic progression with common difference r such that:

$$U_i = i \cdot r \qquad \text{modulo } K_c$$

4. Method according to Claim 3, characterized in that the common difference r is determined as a function of the shift $D_1$ of the first sensor ($C_1$) by the relationship

$$r = \frac{(nK_c+1)D_{min}}{D_1}$$

n being a suitable integer

5. Method according to any one of Claims 2 to 4, characterized in that the value of the sensor pitch ($p_c$) is such that the minimum distance $D_{min}$ is limited on the one hand by a space $D_1$ corresponding to a reading in progress and, on the other hand, less than the maximum shift:

$$D_I < D_{min} < \frac{(p_p-D_I)}{(N_c-1)}$$

6. Method according to Claim 3, characterized in that the order of reading of the summation circuits for the formation, by accumulation of charges, of the luminance signal designed for each pixel starts with the reading of the sensor of highest possible rank defined according to the arithmetic progression $U_i$.

7. Method according to one of the preceding claims, characterized in that the number of sampling signals assigned to the formation of a pixel, equal to the minimum number of summation stages per detection channel is equal to the integer part of the quantity $(N_c - 1)p_c/p_p$.

8. Detection array for the implementation of the method according to any one of the preceding claims, comprising several rows of sensors to cover an image height of a scene projected and scanned by the array, each row constituting a detection channel ($V_k$) comprising one and the same useful number ($N_c$) of sensors ($C_i$) aligned in a scanning direction ($\Delta$) with a spatial pitch ($p_c$), each detection channel ($V_k$) being designed to form pixels of an image line ($L_k$) on the basis of the sampling signals delivered by the sensors during the scanning, these signals are firstly injected, integrated and then read so as to be totalized sequentially by TDI type processing circuits in the focal plane of the array and finally shaped in a management circuit so as to constitute a video signal compatible with a determined pixel pitch pp standard, the array being characterized in that the sensor pitch $p_c$ is differentiated from the pixel pitch pp by a value equal to a fraction of this pixel pitch so that a sensor/pixel coincidence occurs only for a reference sensor ($C_0$) and for a fictitious sensor corresponding to a fictitious number $K_c$ of sensors per detection channel which is greater than the useful number and defining a spatio-temporal coincidence pitch $P_{st}$ between the sensors and the pixels such that:

$$P_{st} = K_p p_p = K_c p_c$$

$K_p$ and $K_c$ being two integers

9. Array according to Claim 8 used for a vertical scanning camera, characterized in that the detection channels are distributed into four sub-blocks (B1 to B4), each channel ($V_k$) of each sub-block consisting of sensors aligned in the vertical direction ($\Pi$) of scanning and being distant from one another by the sensor pitch $p_c$ taken equal to approximately twice the length of a sensor side, in that the sensors of one and the same channel ($V_k$) are connected to one and the same cell ($C_k$) of a summation register, in that a management logic module (LG) pilots the time parameters related to the processing of the charges delivered by the detection array, in that the detection channels ($V_k$) of each sub-block are distant from one another in the horizontal direction ($\Delta$) by a pitch equal to the sensor pitch $p_c$, in that the sub-blocks are displaced with respect to one another in this direction ($\Delta$) by a distance approximately equal to a half-length of a sensor for reasons of space requirement and are grouped together in twos, with a shift equal to a sensor side length, each of the successive detection channels ($V_k$, $V_{k+1}$) of the two sub-blocks of one and the same grouping being then capable of being connected alternately to one and the same shift register $S_1$ or $S_2$, and in that the value of the sensor pitch $p_c$ is given by the relationship $K_p p_p = K_c p_c$ on giving $K_p$ the first value greater than $K_c$ which gives $p_c$ a value greater than the minimum value $p_{min}$ afforded by the technology used.

10. Method according to any one of Claims 1 to 7, applied to the modulation of scanning for an increase in image resolution in the scanning direction by scanning a part of the image and proportional reduction of the scanning speed, corresponding to a magnification in this direction, characterized in that the order of reading of the sensors is chosen as a function of the value of the magnification g desired, the basic parameters of the corresponding reading order arithmetic series, $U_{1g}$ for the first sensor and the common difference "$r_g$", are equal as a function of the corresponding pixel pitch $p_{pg}$ to the desired magnification g:

$$U_{1g} = \frac{(p_c - p_{pg})}{D_l}$$

and

$$r_g = \frac{(nKc + 1)}{U1g}$$

11. Method according to any one of Claims 1 to 7, applied to a multistandard use, characterized in that a search is made for the value common to several standards of the optimal sensor pitch of a vertical scanning array, then the values of the characteristics, $U_1$ and r, are deduced so as to define each of the arithmetic progressions making it possible to establish the order of reading of the sensors corresponding to each of these standards.

12. Array of the type with sub-blocks according to Claim 9 for the implementation of the method according to Claim 11, applied to the multistandard, characterized in that the determination of the pitch of the sub-blocks $P_{sb}$ is done by determining the first of the common multiples of the line pitches of each of the standards which is greater than the height of a detection channel, on the basis of the value of the integer factor $\kappa$ such that:

$$P_{sb} = \kappa P_{sb}(CCIR) \frac{p_p(US)}{p_p(CCIR)}$$

and in that the values of the various characteristic parameters for each of the standards, such as the pixel pitch, the number ($N_c$) of sensors per detection channel, the number ($N_{tdi}$) of summation stages per detection channel, the charge integration time ($T_i$) and overall transfer time ($T_l$) and the scanning speed ($V_b$) for each of the standards are selected on the basis of the common values of the sensor pitch ($p_c$) and of the sub-block pitch ($p_{sb}$).

**13.** Assembly comprising a management circuit and a detection array according to Claim 8, the management circuit being integrated into the focal plane of the detection array and comprising a first register (1) coupled to write (4) and read (5) registers of the registers (2) of TDI summators, and to a generator (6) of integration cycle periods ($T_i$) by way of a decoder (7) piloted by a selector (8) for reading time by transfer ($T_l$), in that the integration period generator (6) pilots the summation registers (2) and the integrators (9) of the charges delivered by the sensors through, respectively, the write register (4) for the summation register (2) and a read and reinitialization register (10) coupled to a demultiplexer register (11) for the integrators (9).

**14.** Assembly comprising a management circuit according to Claim 13 and an array according to Claim 12, and also comprising a scanning and standard mode selector (12) coupled to the integration period generator (6), characterized in that this selector (12) activates decoders (13) and (14) applied at output, respectively, of the write register (4) and of the demultiplexer register (11).

**15.** Assembly according to one of Claims 13 and 14, characterized in that the first register (1), the read and reinitialization register (10), the demultiplexer register (11) and the write (4) and read (5) registers form a basic structure for the management of the information transfer cycles relating to the integration, summation, reading and reinitialization of the sampling signals coming from the sensors so as to deliver, in the course of time, a video signal compatible with a given scanning mode and a given standard, in that the first register (1) is a shift register dedicated to the sequential addressing of the registers of summators (2) that have reached the end of an analysis cycle and to the formation of the video signal (SV) by activation of the output register (16) being sized so as to increment the pulses needed for the other registers (10, 11, 4 and 5), in that the read and reinitialization register (10) is also a shift register enabling the covering of an entire cycle of reading and reinitialization of the assembly of integrators (9) by adjustment of the instants of reading and of reinitialization by the integration period generator (6) piloted by the first register (1), the commands coming from the read and reinitialization register (10) being demultiplexed by the demultiplexer register (11) associated with the decoder (14) so as to be applied in the order defined by the mode of operation to the different integrators (9), in that the write register (4) makes it possible, in association with the decoding matrix (13), to address each of the ($N_{tdi}$) summators of each of the detection channels upon collection of the sampling signals delivered by the sensors of one and the same channel and assigned to the formation of one and the same pixel, the number $N_{tdi}$ of summators activated per detection channel being defined by the mode selector (12), and in that the read register (5), incremented by the first register (1), successively selects the summators (2) at the end of a pixel formation cycle, authorizes their sequential reading for the preparation of the video signal (SV) and increments their reinitialization, and then assigns them to the processing of the sampling signals pertaining to each new pixel.

**16.** Assembly according to either one of Claims 14 and 15, the management circuit comprising a read and reinitialization register (10) which comprises a number of stages equal to the number of sensors per channel ($N_c$) capable of being totally or partially used, characterized in that the charges injected by the injection circuits into the integrators ($i_1$, $i_2$, ..., $i_{Nc-1}$, $i_{Nc}$) are translated into voltage level in the cells ($C_1$, $C_2$, ..., $C_{Nc-1}$, $C_{Nc}$) by virtue of the transfer links ($I_1$, $I_{2x}$, $I_{2y}$, $I_{2z}$, $I_{3x}$, $I_{3y}$, $I_{3z}$, ..., $I_{(Nc-1)x}$, $I_{(Nc-1)y}$, $I_{(Nc-1)z}$, $I_{(Nc)x}$, $I_{(Nc)y}$, $I_{(Nc)z}$) forming the addressing register (11), in that the choice between the links is defined by the choice of a standard ($S_x$, $S_y$ or $S_z$) selected through the selector (12), the selection of the standard resulting in the series activation of one of the coils ($B_x$, $B_y$ or $B_z$) arranged on each of the links which connects each of the cells of the shift register (10) to the integrator whose reading rank corresponds, for the selected standard, to the number of the link considered.

FIG.1

EP 0 738 074 B1

FIG.2

FIG.3

FIG. 4